# EUROPÄISCHE PATENTSCHRIFT

(11) **EP 0 900 679 B1**
(45) Veröffentlichungstag und Bekanntmachung des Hinweises auf die Patenterteilung: **22.10.2003**
(21) Anmeldenummer: 98114057.7
(22) Anmeldetag: 28.07.1998
(51) Int. Cl.: B60J 7/057, H02H 7/085

(54) **Elektromotorischer Antrieb**
Electric motor drive
Système d'entrainement à moteur électrique

(30) Priorität: 04.09.1997 DE 19738776; 18.04.1998 DE 19817362
(43) Veröffentlichungstag der Anmeldung: 10.03.1999
(73) Patentinhaber: ROBERT BOSCH GMBH, 70442 Stuttgart (DE)
(72) Erfinder: Haderer, Guenter, 77815 Buehl (DE)

(56) Entgegenhaltungen:
- EP-A- 0 479 045
- EP-A- 0 692 856
- DE-A- 4 020 351
- DE-A- 19 619 932

## Beschreibung

Die Erfindung betrifft einen elektromotorischen Antrieb beziehungsweise ein Verfahren zur Steuerung eines elektrischen Antriebsmotors mit den im Oberbegriff der Ansprüche 1 und 11 genannten Merkmalen.

### Stand der Technik

Es ist bekannt, Schiebedächer beziehungsweise Schiebe-Ausstell-Dächer (SAD) in Kraftfahrzeugen elektromotorisch zu betätigen. Um bei einem Schließvorgang eines geöffneten, das heißt nach hinten geschobenen Schiebedaches ein Einklemmen eines Gegenstandes oder eine Beschädigung des Antriebes und/oder des Schließmechanismus bei einer mechanischen Störung zu verhindern, sind üblicherweise sogenannte Schließkraftbegrenzungen (SKB) vorgesehen.

Bei solchen Schließkraftbegrenzungen erfolgt entweder eine direkte Messung eines von einem Antriebsmotor aufgebrachten Drehmomentes oder eine indirekte Drehmomentmessung mittels einer Erfassung einer Drehzahl, beispielsweise durch optoelektronische oder durch Hallsensoren, des elektrischen Antriebsmotors.

Bekannt ist auch eine Erfassung eines Motorstromes des elektrischen Antriebsmotors. Die Drehzahl beziehungsweise der Motorstrom schwankt während eines Schließvorganges üblicherweise geringfügig um eine Nenndrehzahl beziehungsweise um einen Nennstrom, beispielsweise aufgrund von Reibwertschwankungen im Schließmechanismus. Wird diese Nenndrehzahl deutlich unterschritten oder fällt sie plötzlich stark ab, wird von der SKB eine mechanische Blockade erkannt und eine Reversierbewegung des Schiebedaches durch eine Drehrichtungsumkehr des elektrischen Antriebsmotors ausgelöst.

Durch eine trägheitsbedingte Beschleunigung des Schiebedaches (in Bezug auf das Fahrzeug) in Schließrichtung nach vorne während eines Bremsvorganges des Kraftfahrzeuges wird eine mit dem Schiebedach wirkverbundene Antriebswelle des Antriebsmotors stark beschleunigt beziehungsweise ein Antriebsmoment des Antriebsmotors deutlich reduziert, da die Motorbelastung abnimmt. Bei einer sehr leichtgängigen Mechanik kann der Antriebsmotor sogar über seine Leerlaufdrehzahl beschleunigt und somit vom Schiebedach angetrieben werden. Ist der Bremsvorgang beendet, beispielsweise bei einem Stillstand des Fahrzeuges, wird das Schiebedach wieder mit der ursprünglichen Vorschubgeschwindigkeit nach vorne bewegt, was einen plötzlichen und starken Drehmomentanstieg beziehungsweise einen Drehzahl- oder Stromsprung bedeutet. Bekannte Vorrichtungen zur Schließkraftbegrenzung weisen den Nachteil auf, eine starke Verzögerung beziehungsweise eine Vollbremsung des Fahrzeuges als Einklemmen des Schiebedachs zu detektieren und eine irrtümliche Reversierbewegung auszulösen.

Mit der DE 40 20 351 A ist ein elektrisches Aggregat zum Schließen von Öffnungen im Kraftfahrzeug bekannt geworden, bei dem von außen auf das Kraftfahrzeug einwirkende Beschleunigungskräfte durch ein zusätzliches Sensorelement detektiert und der Steuereinheit ein Signal der Einklemmschutzvorrichtung zugeführt wird.

Die DE 196 19 932 A beschreibt ebenfalls ein System zum Öffnen und Schließen von Öffnungen im Kraftfahrzeug mit einer Einklemmschutzvorrichtung. Dabei wird eine sprunghaft steigende Krafteinwirkung auf den Verschluss beim Überfahren eines Schlagloches durch einen plötzlichen Anstieg mit sich daran anschließendem Abfall der Umdrehungsdauer l/n festgestellt.

### Vorteile der Erfindung

Die erfindungsgemäße Vorrichtung zur Steuerung eines Antriebsmotors, insbesondere für ein Schiebedach beziehungsweise ein Schiebe-Aussteildach-Dach eines Kraftfahrzeuges, weist den Vorteil auf, durch Mittel zur Erfassung einer während einer Schließbewegung des Schiebedachs auftretender plötzlichen Verzögerung des Kraftfahrzeugs eine Fehlauslösung einer Schließkraftbegrenzung (SKB) und damit einer Reversierbewegung des Schiebedachs unterdrücken zu können. Dies kann in vorteilhafter Weise durch Überwachung einer Schließekraft des Schiebdaches, entweder durch direkte Erfassung des vom Antriebsmotor während des Schließvorganges aufzubringenden Drehmomentes oder durch indirekte Überwachung der Schließkraft durch eine Erfassung der Drehzahl oder des Motorstromes des Antriebsmotors während der Schließbewegung, realisiert werden.

So kann bei einem plötzlichen starken Drehmomentabfall mit unmittelbar folgendem steilen Drehmomentanstieg oder bei einem starken Drehzahlanstieg (Stormabfall) mit unmittelbar folgendem starken Abfall der Drehzahl (Stromanstieg) eine starke Verzögerung beziehungsweise eine Vollbremsung des Kraftfahrzeuges erkannt werden und eine Reversierbewegung des Schiebedaches unterdrückt werden. Dies wird erfindungsgemäß durch ein Ausblenden eines Abschnittes mit einem starken Drehzahleinbruch, der einem plötzlichen Drehzahlanstieg unmittelbar folgt, erreicht. Auf diese Weise löst die Schließkraftbegrenzung in einer derartigen Situation keine unerwünschte Reversierbewegung aus.

In vorteilhafter Weise kann eine bestimmte wählbare Grenzdrehzahl des Antriebsmotors, im folgenden als kritische Drehzahl bezeichnet, so eingestellt werden, daß bei einer Überschreitung dieser kritischen Drehzahl eine starke Verzögerung beziehungsweise eine Vollbremsung des Kraftfahrzeuges erkannt wird und bei einem unmittelbar folgenden Drehzahlabfall des Antriebsmotors keine Reversierbewegung erfolgt. Ein tatsächliches Einklemmen eines Gegenstandes in der Schiebedachöffnung wird vorzugsweise nur dann erkannt, wenn einem plötzlichen Drehzahlabfall des Antriebsmotors kein Drehzahlanstieg mit Überschreitung der kritischen Drehzahl vorausgegangen ist.

Weitere vorteilhafte Ausgestaltungen der Erfindung ergeben sich aus den übrigen, in den Unteransprüchen genannten Merkmalen.

### Zeichnung

Die Erfindung wird nachfolgend in einem Ausführungsbeispiel anhand der zugehörigen Zeichnung, die einen typischen Drehzahlverlauf eines elektrisch betriebenen Antriebsmotors in einem Diagramm zeigt, näher erläutert.

### Beschreibung des Ausführungsbeispiels

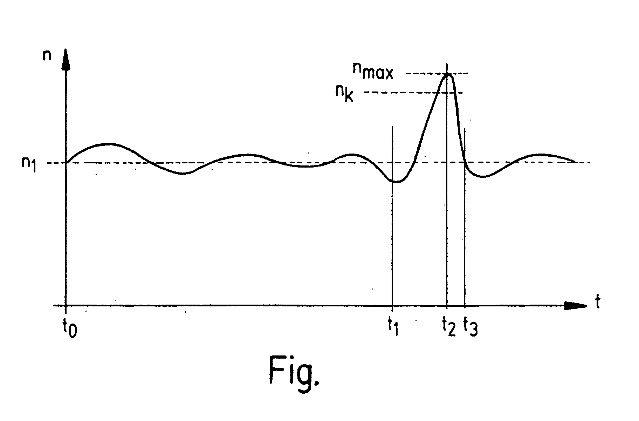

Die Figur zeigt in einem Diagramm einen typischen Drehzahlverlauf eines elektrisch betriebenen Motors zum Antrieb einer Schiebedach- beziehungsweise einer Schiebe-Ausstell-Dach-Mechanik in einem Kraftfahrzeug während eines Schließvorganges und bei einer gleichzeitigen starken Verzögerung beziehungsweise bei einer Vollbremsung des Kraftfahrzeuges. Auf der horizontalen Achse des Diagrammes ist eine Zeit t und auf der vertikalen Achse eine Drehzahl n des Motors aufgetragen.

Ausgehend von einem Zeitpunkt, t₀ zum Beginn eines Schließvorganges ist ein leicht welliger Verlauf der Drehzahl n bis zu einem Zeitpunkt t₁ um einen mittleren Drehzahlwert n₁ erkennbar. Ab dem Zeitpunkt t₁ erfolgt ein plötzlicher starker Anstieg der Drehzahl n deutlich über den Wert von n₁ bis zu einem Maximalwert nₘₐₓ zu einem Zeitpunkt t₂. Der Wert von nₘₐₓ kann im Extremfall sogar über einer Leerlaufdrehzahl des Antriebsmotors liegen.

Ein derartiger Drehzahlanstieg kann unter allen denkbaren Fahrsituationen ausschließlich durch eine starke Verzögerung beziehungsweise eine Vollbremsung des Kraftfahrzeuges während des Schließvorganges ausgelöst werden und führt durch den plötzlichen Abfall der Drehzahl nach Beendigung des Bremsvorganges (zum Zeitpunkt t₂) bei bekannten Systemen mit Schließkraftbegrenzung (SKB) zu einer Reversierbewegung des Schiebedachantriebes, das heißt zu einer Drehrichtungsumkehr des elektrischen Antriebsmotors. Der plötzliche trägheitsbedingte Drehzahlabfall wird von einer Schließkraftbegrenzung somit irrtümlich als ein Einklemmen oder eine mechanische Störung erkannt.

Deutlich wird dies im Diagramm durch einen sehr steilen Abfall der Drehzahl ab dem Zeitpunkt t₂ von nₘₐₓ zurück auf ungefähr die Nenndrehzahl n₁ zum Zeitpunkt t₃. Ab diesem Zeitpunkt t₃ verläuft die Drehzahl wieder mit einer leichten Welligkeit um die Nenndrehzahl n₁, bis das Schiebedach vollständig geschlossen ist. Um eine Fehlauslösung der Schließkraftbegrenzung zuverlässig verhindern zu können, muß eine Vollbremsung erkannt werden und der Zeitraum von t₂ bis t₃ für die Auslösung einer Schließkraftbegrenzung ausgeblendet werden beziehungsweise unberücksichtigt bleiben.

Dies kann insbesondere durch eine entsprechende Programmierung einer elektronisch gesteuerten Schließkraftbegrenzung erfolgen, bei der ein Anstieg der Motordrehzahl über einen bestimmten kritischen Wert, im Diagramm als kritische Drehzahl nₖ verdeutlicht, die zwischen n₁ und nₘₐₓ, jedoch näher bei nₘₐₓ liegt, grundsätzlich als Beschleunigung durch die Massenträgheit des Schiebedaches aufgrund einer starken Verzögerung beziehungsweise einer Vollbremsung des Fahrzeuges erkannt wird.

## Patentansprüche

1. Elektromotorischer Antrieb, insbesondere elektromotorischer Antrieb für ein Schiebedach oder ein Schiebe-Ausstell-Dach (SAD) in einem Kraftfahrzeug, mit einer Vorrichtung zur direkten oder indirekten Erfassung eines von einem Antriebsmotor aufgewendeten Drehmomentes, wobei beim Überschreiten eines Grenzdrehmoments eine Reversierbewegung bzw. Schließkraftbegrenzung des Schiebedaches ausgelöst wird und der Antrieb Mittel zur Erfassung einer während einer Schließbewegung des Schiebedaches auftretenden plötzlichen Verzögerung des Kraftfahrzeuges aufweist und während einer einen bestimmten Wert übersteigenden Verzögerung die Auslösung einer Reversierbewegung unterdrücken kann, **dadurch gekennzeichnet, daß** ein plötzlicher Drehmoment- oder Motorstromabfall mit einem unmittelbar folgenden steilen Drehmoment- oder Motorstromanstieg oder ein plötzlicher Drehzahlanstieg mit einem unmittelbar folgenden steilen Drehzahlabfall als eine starke Verzögerung des Kraftfahrzeugs erkannt wird.

2. Elektromotorischer Antrieb nach Anspruch 1, **dadurch gekennzeichnet, daß** die Überwachung einer Schließkraft des Schiebedachs durch eine Erfassung des vom Antriebsmotor während der Schließbewegung aufzubringenden Drehmomentes erfolgt.

3. Elektromotorischer Antrieb nach Anspruch 1, **dadurch gekennzeichnet, daß** die Überwachung der Schließkraft des Schiebedaches durch eine Erfassung der Drehzahl des Antriebsmotors während der Schließbewegung erfolgt.

4. Elektromotorischer Antrieb nach Anspruch 1, **dadurch gekennzeichnet, daß** die Überwachung der Schließkraft des Schiebedachs durch eine Erfassung eine Motorstromes des Antriebsmotors während der Schließbewegung erfolgt.

5. Elektromotorischer Antrieb nach einem der vorhergehenden Ansprüche, **dadurch gekennzeichnet, daß** während der starken Verzögerung des Kraftfahrzeuges die Schließkraftbegrenzung außer Funktion ist und nach dem Ende der starken Verzögerung wieder in Funktion gesetzt wird.

6. Elektromotorischer Antrieb nach einem der vorherigen Ansprüche, **dadurch gekennzeichnet, daß** die Steuerung und Überwachung des Schließvorganges mittels einer elektronischen Steuervorrichtung erfolgt.

7. Elektromotorischer Antrieb nach einem der vorgehenden Ansprüche, **dadurch gekennzeichnet, daß** eine kritische Drehzahl (nₖ) des Antriebsmotors, die größer ist als eine Nenndrehzahl (n₁) während des Schließvorgangs, als Vollbremsung des Kraftfahrzeuges erkannt wird und zu einer Neuinitialisierung der Schließkraftbegrenzung führt.

8. Verfahren zur Steuerung eines elektromotorischen Antriebes, insbesondere zur Steuerung eines elektromotorischen Antriebes für ein Schiebedach oder ein Schiebe-Ausstell-Dach (SAD) in einem Kraftfahrzeug, mit einer Vorrichtung zur direkten oder indirekten Erfassung eines von einem Antriebsmotor aufgewendeten Drehmomentes, wobei beim Überschreiten eines Grenzdrehmoments eine Reversierbewegung bzw. Schließkraftbegrenzung des Schiebedaches ausgelöst wird und der Antrieb Mittel zur Erfassung einer während einer Schließbewegung des Schiebedaches auftretenden plötzlichen Verzögerung des Kraftfahrzeuges aufweist und während einer einen bestimmten Wert übersteigenden Verzögerung die Auslösung einer Reversierbewegung unterdrücken kann, **dadurch gekennzeichnet, dass** ein plötzlicher Drehzahlanstieg mit einem unmittelbar folgenden steilen Drehzahlabfall oder ein plötzlicher Abfall des Motorstroms mit einem unmittelbar folgenden steilen Anstieg als eine starke Verzögerung des Kraftfahrzeuges erkannt wird.

9. Verfahren nach Anspruch 8, **dadurch gekennzeichnet, daß** die Schließkraft des Schiebedachs durch einer Erfassung der Drehzahl und/oder der Stromstärke des Antriebsmotors während der Schließbewegung erfaßt wird.

10. Verfahren nach einem der Ansprüche 8 oder 9, **dadurch gekennzeichnet, daß** während der starken Verzögerung des Kraftfahrzeuges die Schließkraftbegrenzung außer Funktion gesetzt wird und nach dem Ende der starken Verzögerung wieder in Funktion gesetzt wird.

11. Verfahren nach einem der Ansprüche 8 bis 10, **dadurch gekennzeichnet, daß** eine kritische Drehzahl (nₖ) des Antriebsmotors, die größer ist als eine Nenndrehzahl (n₁) während des Schließvorganges, als Vollbremsung des Fahrzeuges erkannt wird und zu einer Neuinitialisierung der Schließkraftbegrenzung führt.

## Claims

1. Electric motor drive, in particular electric motor drive for a sliding sunroof or a tilting/sliding sunroof (SAD) in a motor vehicle, having a device for directly or indirectly sensing a torque which is applied by a drive motor, a reversing movement or closing force limitation of the sliding sunroof being triggered when a limiting torque is exceeded, and the drive having means for sensing a sudden deceleration of the motor vehicle which occurs during a closing movement of the sliding sunroof, and the drive being able to suppress the triggering of a reversing movement during a deceleration which exceeds a specific value, **characterized in that** a sudden drop in the torque or motor current with a directly following steep rise in the torque or motor current or a sudden rise in the rotational speed with a directly following steep drop in the rotational speed is detected as a severe deceleration of the motor vehicle.

2. Electric motor drive according to Claim 1, **characterized in that** a closing force of the sliding sunroof is monitored by sensing the torque which is to be applied by the drive motor during the closing movement.

3. Electric motor drive according to Claim 1, **characterized in that** the closing force of the sliding sunroof is monitored by sensing the rotational speed of the drive motor during the closing movement.

4. Electric motor drive according to Claim 1, **characterized in that** the closing force of the sliding sunroof is monitored by sensing a motor current of the drive motor during the closing movement.

5. Electric motor drive according to one of the preceding claims, **characterized in that**, during the severe deceleration of the motor vehicle, the closing force limitation is deactivated and is activated again after the end of the severe deceleration.

6. Electric motor drive according to one of the preceding claims, **characterized in that** the control and monitoring of the closing process is carried out by means of an electronic control device.

7. Electric motor drive according to one of the preceding claims, **characterized in that** a critical rotational speed (nₖ) of the drive motor which is higher than a rated rotational speed (n₁) during the closing process is detected as full braking of the motor vehicle and leads to reinitialization of the closing force limitation.

8. Method for controlling an electric motor drive, in particular for controlling an electric motor drive for a sliding sunroof or a tilting/sliding sunroof (SAD) in a motor vehicle, having a device for directly or indirectly sensing a torque which is applied by a drive motor, a reversing movement or closing force limitation of the sliding sunroof being triggered when a limiting torque is exceeded, and the drive having means for sensing a sudden deceleration of the motor vehicle which occurs during a closing movement of the sliding sunroof, and the drive being able to suppress the triggering of a reversing movement during a deceleration which exceeds a specific value, **characterized in that** a sudden rise in the rotational speed with a directly following steep drop in the rotational speed or a sudden drop in the motor current with a directly following steep rise is detected as a severe deceleration of the motor vehicle.

9. Method according to Claim 8, **characterized in that** the closing force of the sliding sunroof is sensed by sensing the rotational speed and/or the current strength of the drive motor during the closing movement.

10. Method according to one of Claims 8 or 9, **characterized in that**, during the severe deceleration of the motor vehicle, the closing force limitation is deactivated and is activated again after the end of the severe deceleration.

11. Method according to one of Claims 8 to 10, **characterized in that** a critical rotational speed (nₖ) of the drive motor which is higher than a rated rotational speed (n₁) during the closing process is detected as full braking of the motor vehicle and leads to reinitialization of the closing force limitation.

## Revendications

1. Entraînement par moteur électrique, en particulier entraînement par moteur électrique pour un toit ouvrant ou un toit ouvrant escamotable (SAD) dans un véhicule automobile, avec un dispositif pour la détection directe ou indirecte d'un couple de rotation exercé par un moteur d'entraînement, dans lequel, en cas de dépassement d'un couple de rotation limite, il se déclenche un mouvement d'inversion, respectivement une limitation de la force de fermeture du toit ouvrant, et dans lequel l'entraînement présente des moyens pour détecter un ralentissement soudain du véhicule automobile se produisant pendant un mouvement de fermeture du toit ouvrant et peut empêcher le déclenchement d'un mouvement d'inversion pendant un ralentissement dépassant une valeur déterminée,
**caractérisé en ce qu'**
une baisse soudaine du couple de rotation ou du courant du moteur immédiatement suivie d'une brusque augmentation du couple de rotation ou du courant du moteur, ou une soudaine augmentation de la vitesse de rotation immédiatement suivie d'une brusque baisse de la vitesse de rotation, est identifiée comme un fort ralentissement du véhicule automobile.

2. Entraînement par moteur électrique selon la revendication 1,
**caractérisé en ce que**
la surveillance d'une force de fermeture du toit ouvrant est effectuée par une détection du couple de rotation à appliquer par le moteur d'entraînement pendant le mouvement de fermeture.

3. Entraînement par moteur électrique selon la revendication 1,
**caractérisé en ce que**
la surveillance de la force de fermeture du toit ouvrant est effectuée par une détection de la vitesse de rotation du moteur d'entraînement pendant le mouvement de fermeture.

4. Entraînement par moteur électrique selon la revendication 1,
**caractérisé en ce que**
la surveillance de la force de fermeture du toit ouvrant est effectuée par une détection d'un courant de moteur du moteur d'entraînement pendant le mouvement de fermeture.

5. Entraînement par moteur électrique selon l'une quelconque des revendications précédentes,
**caractérisé en ce que**
la limitation de la force de fermeture est mise hors service pendant le fort ralentissement du véhicule automobile et est remise en service après la fin du fort ralentissement.

6. Entraînement par moteur électrique selon l'une quelconque des revendications précédentes,
**caractérisé en ce que**
la commande et la surveillance de l'opération de fermeture sont effectuées au moyen d'un dispositif de commande électronique.

7. Entraînement par moteur électrique selon l'une quelconque des revendications précédentes,
**caractérisé en ce qu'**
une vitesse de rotation critique (nc) du moteur d'entraînement, qui est plus grande qu'une vitesse de rotation nominale (ni) pendant l'opération de fermeture, est identifiée comme un freinage total du véhicule automobile et conduit à une nouvelle initialisation de la limitation de la force de fermeture.

8. Procédé pour la commande d'un entraînement par moteur électrique, en particulier pour la commande d'un entraînement par moteur électrique pour un toit ouvrant ou un toit ouvrant escamotable (SAD) dans un véhicule automobile, avec un dispositif pour la détection directe ou indirecte d'un couple de rotation exercé par un moteur d'entraînement, dans lequel, en cas de dépassement d'un couple de rotation limite, il se déclenche un mouvement d'inversion, respectivement une limitation de la force de fermeture du toit ouvrant, et selon lequel l'entraînement présente des moyens pour détecter un ralentissement soudain du véhicule automobile se produisant pendant un mouvement de fermeture du toit ouvrant et peut empêcher le déclenchement d'un mouvement d'inversion pendant un ralentissement dépassant une valeur déterminée,
**caractérisé en ce qu'**
une hausse soudaine de la vitesse de rotation immédiatement suivie d'une brusque baisse de la vitesse de rotation, ou une baisse soudaine du courant du moteur immédiatement suivie d'une brusque augmentation est identifiée comme un fort ralentissement du véhicule automobile.

9. Procédé selon la revendication 8,
**caractérisé en ce que**
la force de fermeture du toit ouvrant est détectée par une détection de la vitesse de rotation et/ou de l'intensité du courant du moteur d'entraînement pendant le mouvement de fermeture.

10. Procédé selon l'une des revendications 8 ou 9,
**caractérisé en ce que**
la limitation de la force de fermeture est mise hors service pendant le fort ralentissement du véhicule automobile et est remise en service après la fin du fort ralentissement.

11. Procédé selon l'une quelconque des revendications 8 à 10,
**caractérisé en ce qu'**
une vitesse de rotation critique (nₖ) du moteur d'entraînement, qui est plus grande qu'une vitesse de rotation nominale (n1) pendant l'opération de fermeture, est identifiée comme un freinage total du véhicule et conduit à une nouvelle initialisation de la limitation de la force de fermeture.
